# EUROPEAN PATENT APPLICATION

(11) **EP 4 814 768 A1**
(43) Date of publication of application: **30.09.2026**
(21) Application number: 25196410.2
(22) Date of filing: 18.08.2025
(51) Int. Cl.: G06F 21/60

(54) **SERVICE PROVIDING SYSTEM, INFORMATION PROCESSING APPARATUS, INFORMATION PROCESSING PROGRAM, AND INFORMATION PROCESSING METHOD**

(30) Priority: 24.03.2025 JP 2025048462
(71) Applicant: FUJIFILM Business Innovation Corp., Minato-ku Tokyo (JP)
(72) Inventor: FUJII, Masaru, Yokohama-shi (JP)
(74) Representative: Haseltine Lake Kempner LLP

(57) **Abstract**

A service providing system includes: a first apparatus including at least one coordination unit that connects to a service on an Internet to provide a function included in the first apparatus, and a first executer that executes the function in coordination with the coordination unit; and a second apparatus existing on the Internet and connected to the first apparatus, the second apparatus including a second executer that generates a third message based on a second message, the third message including identification information of a job for executing the function included in the first apparatus, the second message including information for extracting a first message that includes a command for executing the function from the service and that indicates content of the function to be executed, in which the first executer acquires the third message from the second apparatus and executes the function based on the third message.

## Description

### Background

### (i) Technical Field

The present disclosure relates to service providing systems, information processing apparatuses, information processing programs, and information processing methods.

### (ii) Related Art

Japanese Unexamined Patent Application Publication No. 2024-6386 discloses a service providing system including a first apparatus and a second apparatus. The first apparatus includes: at least one proxy unit that connects a preliminarily-equipped function to a service provided on the Internet; and an execution unit that has first attribute data including status information related to the first apparatus and setting information related to a function included in the first apparatus and that executes the function in coordination with the proxy unit by using the first attribute data if a command related to execution of the function is received. The second apparatus includes a shadow execution unit that has second attribute data corresponding to the first attribute data and that executes the command received from the service and a process requested from the execution unit. The execution unit checks whether or not a message generated by the shadow execution unit exists via a first connection provided between the execution unit and the shadow execution unit, acquires the message if the message exists, and transmits the message to the proxy unit expressed by identification information added to the message. The proxy unit to which the message is transmitted acquires, from the service, information required for executing the function via a second connection provided between the proxy unit and the service associated therewith, and executes the function corresponding to the command.

### Summary

In recent years, there are network-based services that accept user commands issued toward apparatuses, such as image forming apparatuses. By using information registered in the network-based service, the apparatus is made to execute a function (e.g., printing) corresponding to the command. If the apparatus is to be notified of the user command as a message from the network-based service, the size of the message increases as the message becomes complex. This is problematic in terms of an excessive performance load on communication and an excessive usage fee due to usage-based pricing.

Accordingly, it is an object of the present disclosure to provide a service providing system, an information processing apparatus, an information processing program, and an information processing method that simplify a notification message provided to the apparatus from a network-based service and that enable execution of a function included in the apparatus.

According to a first aspect of the present disclosure, there is provided a service providing system including: a first apparatus including at least one coordination unit that connects to a service on an Internet to provide a function included in the first apparatus, and a first executer that executes the function in coordination with the coordination unit; and a second apparatus existing on the Internet and connected to the first apparatus, the second apparatus including a second executer that generates a third message based on a second message, the third message including identification information of a job for executing the function included in the first apparatus, the second message including information for extracting a first message that includes a command for executing the function from the service and that indicates content of the function to be executed, wherein the first executer acquires the third message from the second apparatus and executes the function based on the third message.

According to a second aspect of the present disclosure, in the service providing system according to the first aspect, the coordination unit may acquire the second message from the second apparatus based on the identification information of the job included in the third message from the first executer, acquire the first message from the service based on content of the second message, and execute the function corresponding to the command in coordination with the first executer.

According to a third aspect of the present disclosure, in the service providing system according to the first or second aspect, the first message may include confidential information, and the second message may be configured not to include the confidential information.

According to a fourth aspect of the present disclosure, in the service providing system according to the third aspect, the confidential information may be information for identifying an individual or may be classified information.

According to a fifth aspect of the present disclosure, in the service providing system according to any one of the first to fourth aspects, if the first message does not include confidential information and has a message size smaller than or equal to a predetermined threshold value, the first message and the second message may be identical to each other.

According to a sixth aspect of the present disclosure, in the service providing system according to the second aspect, if a size of the second message from the service is smaller than or equal to a predetermined threshold value, the second apparatus may acquire the second message.

According to a seventh aspect of the present disclosure, in the service providing system according to the second or sixth aspect, if a size of the second message from the service is larger than a predetermined threshold value, the second apparatus may be configured not to acquire the second message.

According to an eighth aspect of the present disclosure, in the service providing system according to the second aspect, if the second message from the service does not include a predetermined text string, the second apparatus may acquire the second message.

According to a ninth aspect of the present disclosure, in the service providing system according to the second or sixth aspect, if the second message from the service includes a predetermined text string, the second apparatus may be configured not to acquire the second message.

According to a tenth aspect of the present disclosure, in the service providing system according to the second aspect, the first executer may further generate information for receiving authentication with respect to the second executer, and the coordination unit may use the information, from the first executer, for receiving the authentication to acquire the second message from the second apparatus.

According to an eleventh aspect of the present disclosure, in the service providing system according to the tenth aspect, the information for receiving the authentication may have a set expiration time, and if the expiration time has elapsed, the coordination unit may make a request to the first executer for the information for receiving the authentication.

According to a twelfth aspect of the present disclosure, there is provided an information processing apparatus connected to a first service on an Internet, the information processing apparatus including a processor configured to: acquire a third message including identification information of a job for executing a function included in the information processing apparatus, the third message being generated based on a second message including information for extracting a first message that includes a command for executing the function from a second service on the Internet and that indicates content of the function to be executed; acquire the second message from the first service based on the identification information of the job included in the third message acquired; acquire the first message from the second service based on content of the second message; and execute the function corresponding to the command.

According to a thirteenth aspect of the present disclosure, there is provided an information processing program for causing a computer connected to a first service on an Internet to execute a process for processing information, the process including: acquiring a third message including identification information of a job for executing a function included in an apparatus, the third message being generated based on a second message including information for extracting a first message that includes a command for executing the function from a second service on the Internet and that indicates content of the function to be executed; acquiring the second message from the first service based on the identification information of the job included in the third message acquired; acquiring the first message from the second service based on content of the second message; and executing the function corresponding to the command.

According to a fourteenth aspect of the present disclosure, there is provided an information processing method executed by an apparatus connected to a first service on an Internet, the information processing method including: acquiring a third message including identification information of a job for executing a function included in the apparatus, the third message being generated based on a second message including information for extracting a first message that includes a command for executing the function from a second service on the Internet and that indicates content of the function to be executed; acquiring the second message from the first service based on the identification information of the job included in the third message acquired; acquiring the first message from the second service based on content of the second message; and executing the function corresponding to the command.

The first aspect may be effective in that the function included in the apparatus may be executed with the simplified message provided as a notification from the network-based service to the apparatus.

The second aspect may be effective in that the message including the command for executing the function may be acquired from the simple message provided as a notification from the network-based service to the apparatus.

The third aspect may be effective in that the function included in the apparatus may be executed without having confidential information included in the message provided as a notification from the network-based service.

The fourth aspect may be effective in that the function included in the apparatus may be executed without having information for identifying an individual or classified information included in the message provided as a notification from the network-based service.

The fifth aspect may be effective in that the function included in the apparatus may be executed without having confidential information included in the message provided as a notification from the network-based service and with the message size being smaller than or equal to the threshold value.

The sixth aspect may be effective in being able to ensure that the size of the message provided as a notification from the network-based service is smaller than or equal to the threshold value.

The seventh aspect may be effective in being able to ensure that, of the message provided as a notification from the network-based service, a message whose size is larger than the threshold value is not to be acquired.

The eighth aspect may be effective in being able to ensure that the message provided as a notification from the network-based service does not include the predetermined text string.

The ninth aspect may be effective in being able to ensure that, of the message provided as a notification from the network-based service, a message including the predetermined text string is not to be acquired.

The tenth aspect may be effective in that only the first apparatus having the information for receiving the authentication may acquire the second message from the second apparatus.

The eleventh aspect may be effective in that the second message may be acquired from the second apparatus even if the expiration time set for the information for receiving the authentication has elapsed.

The twelfth aspect may be effective in that the function included in the apparatus may be executed with the simplified message provided as a notification from the network-based service to the apparatus.

The thirteenth aspect may be effective in that the function included in the apparatus may be executed with the simplified message provided as a notification from the network-based service to the apparatus.

The fourteenth aspect may be effective in that the function included in the apparatus may be executed with the simplified message provided as a notification from the network-based service to the apparatus.

### Brief Description of the Drawings

An exemplary embodiment of the present disclosure will be described in detail based on the following figures, wherein:
Fig. 1 illustrates a system configuration example of a service providing system;
Fig. 2 illustrates a functional configuration example of each of a shadow component and an image forming apparatus;
Fig. 3 illustrates a relevant configuration example of an electrical system of a computer constituting the shadow component;
Fig. 4 illustrates a relevant configuration example of an electrical system of the image forming apparatus;
Fig. 5 is a flowchart illustrating an example of the flow of a service providing process executed by a service, a central processing unit of the image forming apparatus, and a central processing unit of the computer constituting the shadow component; and
Fig. 6 is a sequence diagram illustrating an example of the flow of data when a facsimile transfer function is executed by using the service.

### Detailed Description

An exemplary embodiment of the present disclosure will be described below with reference to the drawings. Identical components and identical processes will be given the same reference sign throughout the drawings, and redundant descriptions thereof will be omitted.

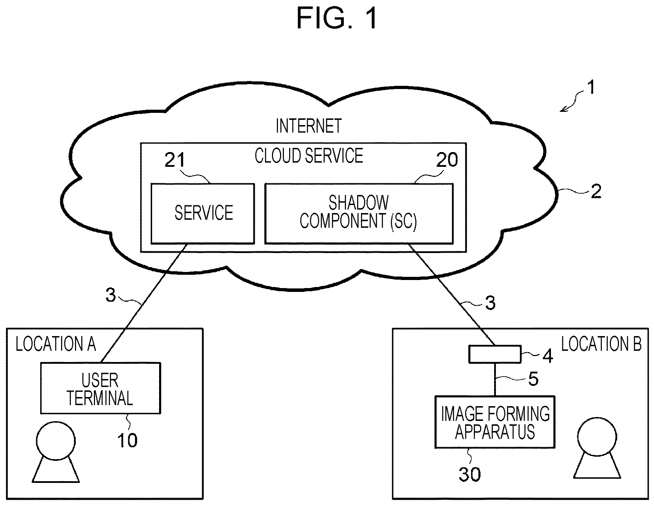

Fig. 1 illustrates a system configuration example of a service providing system 1 according to this exemplary embodiment. As shown in Fig. 1, the service providing system 1 includes a user terminal 10, a shadow component 20, a service 21, and an image forming apparatus 30, and provides a coordinated service between the service 21 and the image forming apparatus 30 to a user.

The user terminal 10 is, for example, an information device existing at a location A and is operated by a user using the service providing system 1. In detail, the user terminal 10 is an information device, such as a computer, a smartphone, a tablet terminal, or a wearable terminal, equipped with a data input-output function, a data processing function, and a communication function. The user terminal 10 may either be a portable information device used in varying locations or a stationary information device used in a preliminarily fixed location.

The image forming apparatus 30 as an example of a first apparatus according to the exemplary embodiment of the present disclosure performs image-related data processing in response to a user command. Examples of the image-related data processing include a scan function for scanning content on a paper medium, such as a document, as image data, a scan transfer function for transferring the image data of the document acquired by the scan function to a storage destination, such as a storage service, on the Internet 2 and storing the image data in the storage destination, a print function for forming the image data preliminarily designated by a user as an image onto a paper medium, and a facsimile function for performing transmission and reception of information via a telephone line.

The image forming apparatus 30 retains setting information related to each of the functions included in the image forming apparatus 30. An example of the setting information for the facsimile function includes information about a facsimile transmission destination.

The image forming apparatus 30 is installed in a remote location (e.g., a workplace at a business site and indicated as "location B" in the example in Fig. 1) different from the location A (e.g., a head office) where the user operates the user terminal 10.

Therefore, if a user (referred to as "neighboring user" hereinafter) located at the location B is to use a service using the image forming apparatus 30, the neighboring user is capable of issuing a command to the image forming apparatus 30 by touching, for example, a control panel of the image forming apparatus 30. However, if a user (referred to as "remote user" hereinafter) located at the location A is to use the coordinated service between the service 21 and the image forming apparatus 30 on the Internet 2, it is not realistic for the remote user to move to the location B to operate the image forming apparatus 30.

In order to allow the remote user to use the coordinated service between the service 21 and the image forming apparatus 30 on the Internet 2 from the location A, the shadow component 20 is provided to enable exchanging of a processing message with the service 21 on the Internet 2 via an application programming interface (API) serving as a predetermined interface. The remote user and the neighboring user may sometimes be collectively referred to as "users" hereinafter.

The shadow component 20 is, for example, a program module constructed by using a cloud service provided on the Internet 2, is capable of exchanging a processing message with the service 21 via the predetermined interface, and is connected to the image forming apparatus 30 by a communication line 3 via a firewall 4 that accommodates a local area network (LAN) 5 connected to the image forming apparatus 30.

The shadow component 20 includes a metadata retainer 24 that retains metadata serving as a data set including status information about the image forming apparatus 30 and attribute data of the image forming apparatus 30, such as setting values defining the apparatus configuration of the image forming apparatus 30 and the operation of the image forming apparatus 30.

Specifically, the shadow component 20 retains, as metadata, data containing attribute data identical to the attribute data of the image forming apparatus 30 installed in the location B.

Therefore, when the remote user issues a processing command to the image forming apparatus 30 from the user terminal 10 via the service 21, the service 21 outputs the command to the shadow component 20 via the predetermined interface, the shadow component 20 converts the content of the command into information in a format interpretable by the image forming apparatus 30, and provides this information to the image forming apparatus 30. Performing this process enables the remote user to virtually operate the image forming apparatus 30 installed in the location B.

The attribute data is expressed by a combination of an attribute item and a value, and includes the status information of the image forming apparatus 30 and the setting information of the image forming apparatus 30. The shadow component 20 performs synchronization of the attribute data with the image forming apparatus 30 via the communication line 3, so that the shadow component 20 is capable of making the content of the attribute data retained by the shadow component 20 identical to the content of the attribute data retained by the image forming apparatus 30. In addition to synchronizing the attribute data between the shadow component 20 and the image forming apparatus 30 via the communication line, the shadow component 20 may generate processing request data for a function included in the image forming apparatus 30 and transmit the processing request data as a job to the image forming apparatus 30, thereby causing the image forming apparatus 30 to execute a job processing function.

The type of connection of the communication line 3 and the LAN 5 in the service providing system 1 is not limited, and may be a wired connection, a wireless connection, or a mixture of wired connection and wireless connection. The communication line 3 may be, for example, a dedicated line or a virtual private network (VPN) line.

In order to prevent the image forming apparatus 30 from accepting unauthorized access from the Internet 2, the firewall 4 is set so as not to accept, from the Internet 2, data other than a response to a request transmitted from the image forming apparatus 30. Furthermore, by using a technique called secure tunneling, the port and the communication protocol may be set to enable bidirectional communication between the image forming apparatus 30 and a specific service on the Internet 2, thereby enabling bidirectional communication.

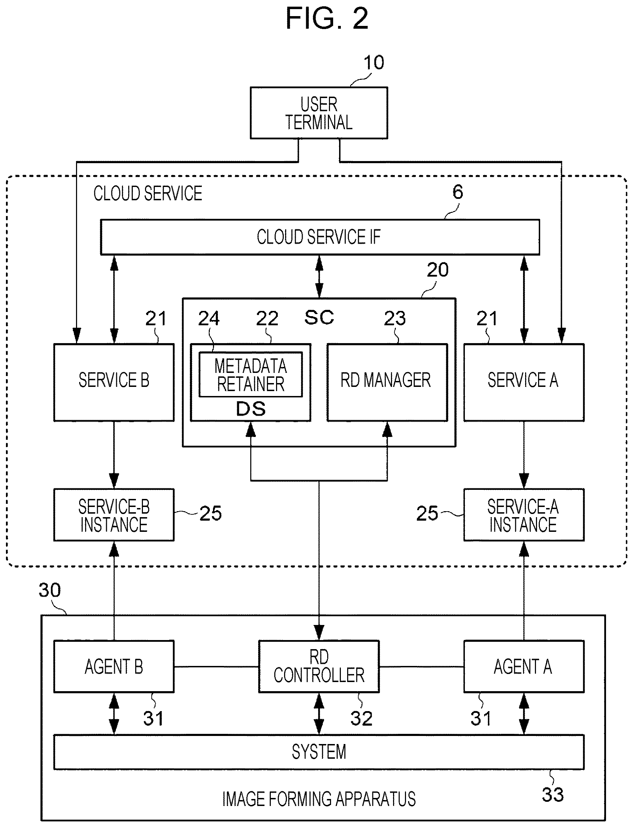

Fig. 2 illustrates a functional configuration example of each of the shadow component 20 (referred to as "SC 20" hereinafter) implemented by using the cloud service and the image forming apparatus 30, as well as a coordination example between functional blocks.

The following description relates to an example where the remote user uses a coordinated service between the service 21 on the Internet 2 and a function included in the image forming apparatus 30 connected to the Internet 2 protected via the firewall 4. The user connects the user terminal 10 to the service 21. The cloud service is provided with a cloud service interface (IF) 6 serving as an API defined between predetermined cloud services, and is capable of performing input and output of the content of a processing command between the service 21 and the shadow component 20. The service 21 temporarily receives a command transmitted from the remote user via the user terminal 10, converts the received command into a command format of the service IF, and subsequently transfers the command to the service 21. This service IF is described in a format obtained by abstracting the command issued for the function of the image forming apparatus 30 and the input and output of a processing result. Accordingly, when the remote user is to use the user terminal 10 to issue a command for executing the function included in the image forming apparatus 30, the remote user may issue the command without knowing the specific functional specifications of the image forming apparatus 30. Similarly, without knowing the specific functional specifications of the image forming apparatus 30, a developer of the service 21 may use the cloud service IF 6 for the input and output of the abstracted function of the image forming apparatus 30 to make a processing request, and acquire an execution result.

Accordingly, when the remote user desires to use the function included in the image forming apparatus 30, the remote user connects the user terminal 10 to the service 21 and commands the service 21 to coordinate the service 21 with the function included in the image forming apparatus 30.

The SC 20 has design information that defines the function of the image forming apparatus 30. A command for executing the abstractly described function received from the service 21 via the cloud service IF 6 may be converted into processing request data interpretable by the image forming apparatus 30 and be transferred to the image forming apparatus 30 via the communication line 3. There may be multiple services 21 corresponding to the function to be used in coordination with the image forming apparatus 30. When such services 21 are to be distinguished from each other hereinafter, the services will be expressed without being given the reference sign "21" to the suffix, as in "service A" and "service B".

The SC 20 includes, for example, a digital shadow (DS) unit 22 and a real device (RD) manager 23. The DS unit 22 further includes the metadata retainer 24 for, for example, attribute data.

The DS unit 22 is a component that executes a process in accordance with a requested command in coordination with the service 21 and the RD manager 23.

The RD manager 23 is a component that communicates with an RD controller 32. For example, the RD controller 32 performs an attribute-data synchronization process by causing the SC 20 to operate in coordination with the image forming apparatus 30, and also performs a process for receiving a processing request generated by the SC 20 for the function included in the image forming apparatus 30 and causing the image forming apparatus 30 to execute the function. The RD manager 23 communicates with the connected image forming apparatus 30 to determine whether or not the image forming apparatus 30 is a proper preliminarily-registered image forming apparatus 30. When determining that the image forming apparatus 30 is a proper image forming apparatus 30, the RD manager 23 performs a communication control process, such as the attribute-data synchronization process. If the connected image forming apparatus 30 is not a proper image forming apparatus 30, the RD manager 23 does not connect the SC 20 and the image forming apparatus 30 to each other to enhance the security of the service providing system 1.

The metadata managed by the DS unit 22 is an aggregate of an attribute item and a value to be synchronized between the SC 20 and the image forming apparatus 30. In the synchronization of the attribute data, even if an attribute item value is updated in at least one of the SC 20 and the image forming apparatus 30, the SC 20 and the image forming apparatus 30 notify each other of the attribute item value so that the attribute item maintains the same value. Of the attribute data of the image forming apparatus 30, a value of an attribute item (referred to as "synchronization-target attribute item" hereinafter) preliminarily designated as a synchronization target is included in the metadata. An attribute item value is a value associated with an attribute item, and the attribute item value includes a numerical value and a text string. The synchronization-target attribute item may include attribute items of all attributes included in the attribute data or may include preliminarily-set attribute item or items. Moreover, the synchronization-target attribute item may be an attribute item whose value has been changed within a predetermined period, or may be a newly-set attribute item.

A service instance 25 is a component that represents an actual service 21, is associated with each service 21, and is deployed on the cloud service. In detail, the service instance 25 is a component that includes an interface for receiving a function-related command of the image forming apparatus 30 and that executes a process in accordance with design information defined by the service 21.

In Fig. 2, the service instance 25 representing the actual service A is a service-A instance 25, and the service instance 25 representing the actual service B is a service-B instance 25. The term "service instance 25" is a collective term that is for components representing the actual services 21 and that is used when they are not to be distinguished from each other, as in the service-A instance 25 and the service-B instance 25. Although the example in Fig. 2 illustrates only the connection between the cloud service IF 6 and the service-B instance 25, the cloud service IF 6 and the service-A instance 25 may sometimes be connected to each other, where necessary.

Accordingly, the service instance 25 is a component that actually executes the function defined by the associated service 21. Since the service 21 and the service instance 25 are closely related to each other, the service 21 and the service instance 25 may simply be collectively referred to as "service 21" within a range in which a misunderstanding does not occur in the description.

On the other hand, the image forming apparatus 30 associated with the SC 20 includes, for example, an agent 31, the RD controller 32, and a system 33.

The agent 31 is a component for providing the function included in the image forming apparatus 30 in coordination with an external service. More specifically, the agent 31 is a component that communicates with the service instance 25 to exchange information, which is for providing the function to the user, with the service instance 25. The agent 31 and the service instance 25 are associated with each other for each type of function.

For example, the service-A instance 25 that provides a function A defined by the service A is associated with an agent A that provides the function A, and the service-B instance 25 that provides a function B defined by the service B is associated with an agent B that provides the function B. Specifically, when viewed from the service instance 25, the agent 31 may be regarded as a client that processes a function execution request received by the service 21 in coordination with the service 21. Therefore, the agent 31 is an example of a coordination unit.

Although the service 21 is described as preliminarily having agent identification information for uniquely identifying the agent 31 that executes the function associated with the service 21 as an example, the method for managing the agent identification information is not limited to this. For example, the service 21 may simply have information indicating the type of function that it executes, and the DS unit 22 may associate the agent identification information therewith based on the information indicating the type.

As described above, when the agents 31 are to be distinguished from each other based on the respective functions, the agents 31 are expressed without being given the reference sign "31" to the suffix, as in "agent A" and "agent B".

As already described above, the RD controller 32 receives, from the SC 20, information obtained as a result of converting a processing request received by the SC 20 from the service 21 into a format interpretable by the image forming apparatus 30, and functions as an interface with the DS unit 22 when the function included in the image forming apparatus 30 is to be provided as the service 21 to the user. In detail, the RD controller 32 functions as an interface for performing the attribute-data synchronization process with the SC 20 and also receives, from the SC 20, information converted into the format interpretable by the image forming apparatus 30. Therefore, the RD controller 32 is connected to the DS unit 22 and the RD manager 23 of the SC 20, and is connected to each agent 31 and the system 33 inside the image forming apparatus 30. The RD controller 32 is an example of a first executer.

The system 33 manages all of the attribute items in the image forming apparatus 30, refers to the attribute items to be managed, and operates in coordination with each agent 31 and the RD controller 32 to control the execution of the function included in the image forming apparatus 30.

The SC 20 and the image forming apparatus 30 described above may be configured by using a computer 40 and a computer 50, respectively.

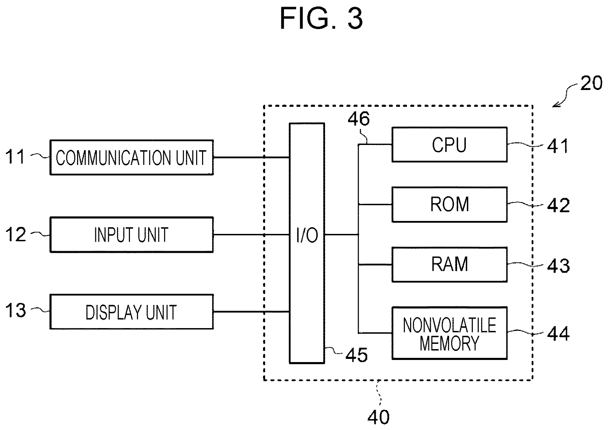

Fig. 3 illustrates a relevant configuration example of an electrical system of the computer 40 that operates the cloud service constituting the SC 20.

The computer 40 as an example of a second apparatus includes a central processing unit (CPU) 41 as an example of a processor responsible for the processing of the components of the SC 20 shown in Fig. 2, a read only memory (ROM) 42 that stores a program (basic input output system (BIOS)) for activating the computer 40, a random access memory (RAM) 43 used as a temporary work area of the CPU 41, a nonvolatile memory 44, and an input-output interface (I/O) 45. The CPU 41, the ROM 42, the RAM 43, the nonvolatile memory 44, and the I/O 45 are connected to one another by a bus 46.

The nonvolatile memory 44 is an example of a storage device that maintains stored information even when electric power supplied to the nonvolatile memory 44 is cut off, and is, for example, a semiconductor memory but may alternatively be a hard disk. For example, the nonvolatile memory 44 continuously stores therein data, such as the metadata in the metadata retainer 24, even when the power of the computer 40 is cut off. Therefore, for example, the nonvolatile memory 44 stores an information processing program that causes the computer 40 to function as the SC 20.

The I/O 45 is connected to, for example, a communication unit 11, an input unit 12, and a display unit 13.

The communication unit 11 is connected to the communication line 3, and includes a communication protocol that performs data communication mutually with the user terminal 10 and the image forming apparatus 30.

The input unit 12 is a unit that receives an operation performed by a manager who manages the cloud service and that provides a notification to the CPU 41, and includes, for example, a button, a touchscreen, a keyboard, a mouse, and a pointing device.

The display unit 13 generates visually displayable information based on information processed by the CPU 41.

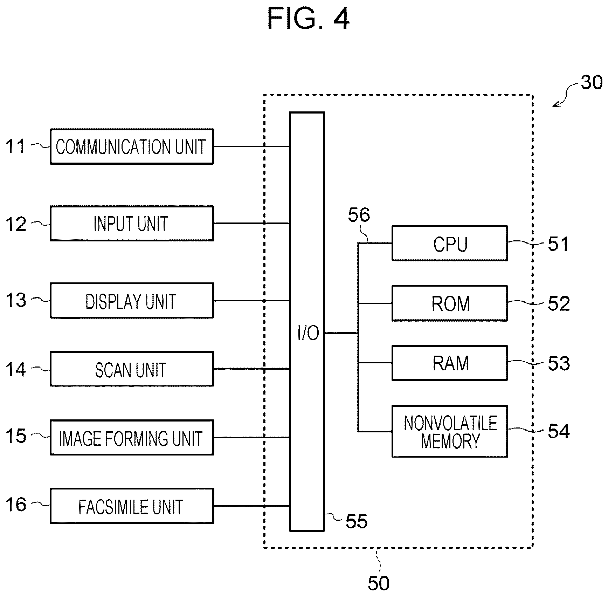

Fig. 4 illustrates a relevant configuration example of an electrical system of the image forming apparatus 30 configured by using the computer 50.

The computer 50 executes the processing of the components of the image forming apparatus 30 shown in Fig. 2, and includes a CPU 51 as an example of a processor that controls the system 33, a ROM 52 that stores the BIOS for activating the computer 50, a RAM 53 used as a temporary work area of the CPU 51, a RAM 53 used as a temporary work area of the CPU 51, a nonvolatile memory 54, and an I/O 55. The CPU 51, the ROM 52, the RAM 53, the nonvolatile memory 54, and the I/O 55 are connected to one another by a bus 56.

For example, the nonvolatile memory 54 continuously stores therein data, such as an image forming program for causing a resource 306 or the computer 50 to function as the image forming apparatus 30, even when the power of the image forming apparatus 30 is cut off.

The I/O 55 is connected to, for example, the communication unit 11, the input unit 12, the display unit 13, a scan unit 14, an image forming unit 15, and a facsimile unit 16.

The scan unit 14 uses an optical reader (not shown) to read the content of a document transported onto transport document read glass (not shown), and converts the read content into image data.

The image forming unit 15 forms an image expressed by the image data on a paper medium by using a colorant. The type of image forming method used in the image forming unit 15 is not limited, and may be an electrophotographic method or an inkjet method.

The facsimile unit 16 transmits and receives image data to and from another device having a facsimile function via a telephone line (not shown).

Needless to say, the units connected to the computer 40 and the computer 50 are not limited to the units shown in Figs. 3 and 4. The computer 40 and the computer 50 may be selectively connected to required units.

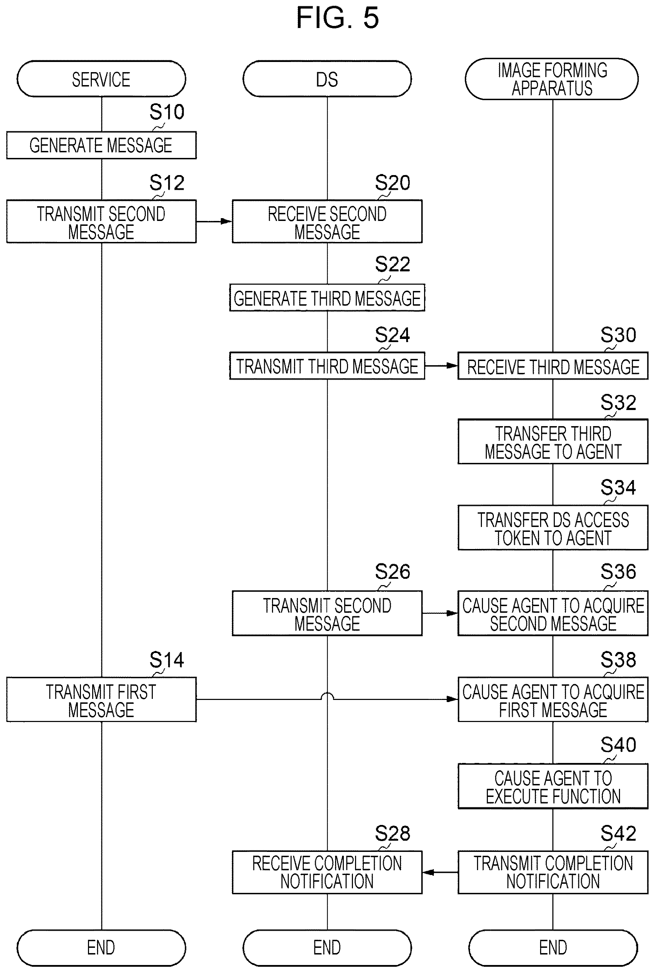

A service providing process in the service providing system 1 will now be described. Fig. 5 is a flowchart illustrating an example of the flow of the service providing process executed by the CPU 51 of the image forming apparatus 30 and by the CPU 41 of the computer 40 that operates the cloud service constituting the service 21 and the SC 20 when the user uses the user terminal 10 to command the service 21 to execute a function included in the image forming apparatus 30.

An information processing program of the image forming apparatus 30 that defines the service providing process is preliminarily stored in, for example, the nonvolatile memory 54 of the image forming apparatus 30. The CPU 51 of the image forming apparatus 30 reads the information processing program stored in the nonvolatile memory 54 and executes the service providing process.

A server program of the computer 40 that defines the service providing process is preliminarily stored in, for example, the nonvolatile memory 44 of the computer 40. The CPU 41 of the computer 40 reads the server program stored in the nonvolatile memory 44 and executes the service providing process.

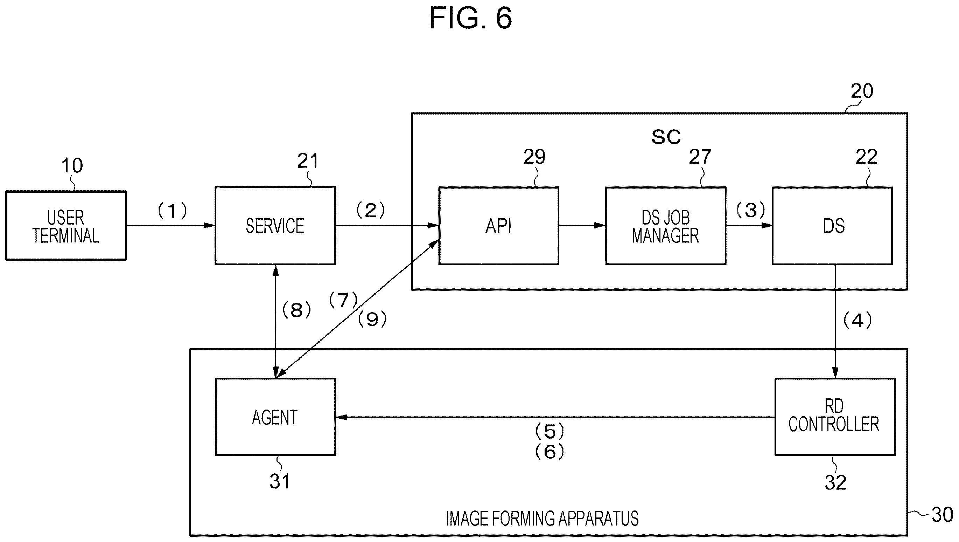

The following description with reference to Fig. 6 is provided for an easier understanding of the flow of the service providing process shown in Fig. 5. The following description relates to an example where a facsimile-received document is accumulated in the image forming apparatus 30 and a command for transferring the accumulated facsimile-received document to predetermined cloud storage is issued. For example, the purpose of this command is to transfer facsimile-received documents received by the image forming apparatuses 30 at multiple respective business sites of a corporation having the business sites to a predetermined storage unit at the head office and to centrally manage the documents.

When the user uses the user terminal 10 to command the service 21 to execute the function included in the image forming apparatus 30 ((1) in Fig. 6), the service 21 generates a first message Msg1 and a second message Msg2 in step S10. The first message Msg1 includes a command for executing the function included in the image forming apparatus 30 and indicates the content of the function to be executed. The second message Msg2 includes information for extracting the first message.

In this case, the service 21 generates the first message Msg1 by providing a server endpoint (e.g., pre-signed URL) for the agent 31. When there is access from the agent 31 in a subsequent process, certificate verification is performed between the agent 31 and the service 21, so that the first message Msg1 is securely transmitted to the agent 31. "Pre-signed URL" refers to a pre-signed temporary repository.

Since a transfer command for a facsimile-received document is described as an example here, the message includes confidential information and thus has a large size. For example, the service 21 generates the first message Msg1 and the second message Msg2 as indicated below. Both messages are in JSON format and are uniquely defined by the service 21.

An example of the first message Msg1 includes transfer command information, as indicated below.

```
 {
 {
 "orderID": 12345678,
 "executeUserID":"Michael555",
 "executeUserPW":"password987Foo",
 "faxDocTransfer":{
 {
  "boxID": 1201,
  "docID": 500001,
  "ToURL": "https://hogestorage.cojp/...
  "storageUserID: "xyzMicheal777",
  "storageUserPW:"password345XYZ",
 }
 }
 ...(transfer command information of 100 documents is indicated hereinafter)
 }
```

The first message Msg1 includes, as confidential information, information indicating a document operation account for a confidential box in the image forming apparatus 30. It is assumed here that the service 21 retains password information.

The first message Msg1 includes, as confidential information, information indicating an account given write access to a storage unit at a transfer destination. The confidential information may be information for identifying an individual or may be classified information.

The size of the first message Msg1 is, for example, 40 KB.

An example of the second message Msg2 is as follows, and does not include confidential information.

```
 {
 "relatedOrderID":12345678,
 "orderFunction" : "faxDocTransfer",
 "orderMsgURL" : "https://fooService/xxx"
 }
```

The size of the second message Msg2 is, for example, 0.1 KB.

The "orderMsgURL" key in this example is a temporary URL used by the agent 31 for accessing the first message Msg1.

In step S12, the service 21 transmits the generated second message to an API 29 ((2) in Fig. 6).

For example, the service 21 invokes the API 29 (e.g., HTTP-REST) and transmits the second message Msg2 thereto. The invoking of the API 29 involves designating which image forming apparatus 30 is to be set as a target. The designating method is not limited, but may involve, for example, designating an identifier for uniquely specifying the image forming apparatus 30 in a URL query of the API 29 or in the second message Msg2. The following example relates to a case where the URL query of the API 29 includes an identifier "rdId=Foo123456-789012" for designating the image forming apparatus 30.

[POST] https:// hogehoge.dsfw.cojp/addMsg/rdId=Foo123456-789012

In step S20, a DS job manager 27 receives the second message via the API 29 and accumulates the received second message in the DS job manager 27.

In this case, the DS job manager 27 may be configured to acquire the second message if the size of the second message from the service 21 is smaller than or equal to a predetermined threshold value, and may be configured not to acquire the second message if the size of the second message is larger than the predetermined threshold value.

For example, if the size of the second message from the service 21 is larger than the predetermined threshold value (e.g., 1 KB), the DS job manager 27 does not acquire the second message and returns an error response to the service 21.

The DS job manager 27 may be configured to acquire the second message if the second message from the service 21 does not include a predetermined text string, and may be configured not to acquire the second message if the second message includes the predetermined text string.

For example, the DS job manager 27 analyzes the second message from the service 21, does not acquire the second message if the second message partially matches a banned word list, and returns an error response to the service 21. The banned word list includes, for example, "password", "pw", and "confidential".

The DS job manager 27 is an example of a second executer.

In step S22, the DS job manager 27 generates a third message including identification information of a job for executing the function included in the image forming apparatus 30 in a format interpretable by the image forming apparatus 30 based on the received second message, and transfers the third message to the DS unit 22 ((3) in Fig. 6).

In detail, based on the received second message, the DS job manager 27 issues the job for executing the function included in the image forming apparatus 30 in the format interpretable by the image forming apparatus 30, and initializes and manages job-related attribute information as indicated below.

```
 "jobId": "xyzService__00000000-0316-2024-0228-031600000007",
 "status": "QUEUED",
 "lastUpdateAt": 1709097586,
 "executionNumber": 1,
```

Furthermore, the DS job manager 27 associates the received second message with the issued job and stores them in the internal nonvolatile memory 44.

If there is a non-notified job, the DS job manager 27 generates a third message including the job identification information, as indicated below, and transfers the third message to the DS unit 22.

```
 {
 "queuedJobs":
  {
   "jobId": "xyzService_00000000-0316-2024-0228-031600000007",
   "executionNumber": 1
  }
 ]
 }
```

The text string "queuedJobs" indicates that there is a job in a queued state.

In step S24, the DS unit 22 transmits the received third message to the RD controller 32 of the image forming apparatus 30 ((4) in Fig. 6). By including the third message in the data exchanged in the synchronization process for synchronizing attribute data at every predetermined interval between the RD controller 32 of the image forming apparatus 30 and the DS unit 22, the third message may be transmitted from the DS unit 22 to the image forming apparatus 30. If bidirectional communication is possible between the image forming apparatus 30 and the DS unit 22, the DS unit 22 may transmit the third message to the image forming apparatus 30 at a time point when the third message is generated.

In detail, the DS unit 22 detects a new job at a timing when the new job is issued at the DS job manager 27. Alternatively, the DS unit 22 checks whether there is a new job in a polling fashion.

If there is a new job, the DS unit 22 transmits a third message of the job to the RD controller 32.

It is assumed here that the DS job manager 27 and the RD controller 32 are in a synchronously connected state.

In step S30, the RD controller 32 receives the third message from the DS unit 22.

In step S32, the RD controller 32 interprets the received third message and transfers the third message to the agent 31 based on the interpretation result ((5) in Fig. 6).

In detail, the RD controller 32 extracts a text string ranging from the first character to the delimiter "_" in "JobID" included in the received third message. For example, the text string "xyzService" is extracted from '"jobId": "xyzService_00000000-0316-2024-0228-031600000007"'. The RD controller 32 identifies the destination for the agent 31 from the extracted text string. For example, the destination for the agent 31 is identified by checking information indicating a preliminarily-prepared destination against the extracted text string.

```
 "xyzService":{
    "agent": {
        "identifier": "com.xyzsoft.xyzserver",
        "sendPort":"8001", ← port number
        "sendPath":localhost/xyzmodule/foo/?abc=foo123" ← server URL
   },
 "hogetask1":{
    "agent": {
        "identifier": "hogetask1",
        "sendPath": localhost/hogemodule/hoge/?abc=hogehoge"
 }
```

The text string '"sendPort":"8001"' indicates a port number. The text string '"sendPath":localhosbxyzmodule/foo/?abc=foo123"' indicates the URL of the agent 31.

The method of how the third message is transferred from the RD controller 32 to the agent 31 is not limited. For example, if the agent 31 is provided with a built-in web server, the RD controller 32 sets an HTTP client and issues an HTTP request directed to a local host address, so as to transfer the third message.

In step S34, the RD controller 32 issues a DS access token for accessing the DS unit 22, and transfers the DS access token to the agent 31 ((6) in Fig. 6). The DS access token is an example of information for receiving authentication.

The DS access token has a set expiration time. If the DS access token is expired, the agent 31 may request the RD controller 32 for the DS access token. For example, by sending a token issuing request (e.g., HTTP request by local loopback) from the agent 31 to the RD controller 32, the DS access token may be returned as a response.

In step S36, the agent 31 uses the DS access token to acquire the second message from the DS job manager 27 via the API 29 based on the job identification information included in the third message ((7) in Fig. 6).

In this case, in step S26, the DS job manager 27 transmits the second message, corresponding to the job identification information included in the third message that the agent 31 has, to the agent 31. In detail, the DS job manager 27 receives the job identification information and the DS access token, ensures security in accordance with bearer authentication (authenticity), identifies the second message Msg2, and transmits the identified second message Msg2 to the agent 31.

In step S38, the agent 31 acquires the first message from the service 21 based on the content of the second message ((8) in Fig. 6).

In detail, the agent 31 determines that there is a command for transferring a facsimile-received document based on the "orderFunction" attribute in the second message Msg2. The "orderFunction" attribute is a command code preliminarily designed at a time point when the service 21 and the agent 31 are developed.

The agent 31 performs transport-layer-security (TLS) communication with a target endpoint (e.g., pre-signed URL of AWS-S3) indicated in the "orderFunction" attribute in the second message Msg2, so as to acquire the first message Msg1.

If the first message does not include confidential information and the function is implementable within the specification range of the second message Msg2, this step may be omitted. If the first message does not include confidential information and the size of the message is smaller than or equal to the predetermined threshold value, the first message and the second message may be identical to each other.

In this case, in step S14, the service 21 transmits, to the agent 31, the first message corresponding to the second message that the agent 31 has.

In step S40, the agent 31 executes the function corresponding to the command based on the acquired first message.

For example, the process is performed based on information required for transferring the facsimile-received document included in the first message Msg1.

In the above-described example of the first message Msg1, "executeUserID" and "executeUserPW" are confidential information used for logging into the image forming apparatus 30, "boxID" and "docID" are information used for accessing a facsimile-received document in a box operation of the image forming apparatus 30, "storageUserID" and "storageUserPW" are authentication information used for accessing a facsimile-received document in the box operation of the image forming apparatus 30 and are confidential information, and "ToURL" is information used for transferring a facsimile-received document in the box operation of the image forming apparatus 30.

A facsimile-received-document transfer function is executed as an existing function of the image forming apparatus 30. In detail, a transmission client using a file transmission protocol (FTP or SMB transfer) is internally generated and is transmitted together with authentication information to the "ToURL" destination. This process may be performed by the agent 31 or may be performed by a different module inside the image forming apparatus 30.

In step S42, after completing the execution of the function, the agent 31 transmits a completion notification to the DS job manager 27 via the API 29 ((9) in Fig. 6).

In detail, the agent 31 transmits a completion notification together with the job identification information and the DS access token to the DS job manager 27 by using, for example, HTTP-REST.

In step S28, the DS job manager 27 receives the completion notification transmitted from the agent 31 and sets the status of the job to a completion status. Moreover, for example, the DS job manager 27 may transmit the completion notification to the service 21 by HTTP or email. Alternatively, the service 21 may perform polling on a notification queue of the DS job manager 27.

The DS job manager 27 deletes an object of the second message Msg2 of the job from inside the DS unit 22.

If an error occurs in any of the steps leading to step S28 described above, the agent 31 may provide a notification to the service 21 by notifying the DS job manager 27 of error information.

Accordingly, in the service providing system described above, the DS job manager generates the third message including the identification information of the job for executing the function included in the image forming apparatus 30 based on the second message including the information for extracting the first message that includes the command for executing the function from the service 21 and that indicates the content of the function to be executed. The agent 31 acquires the third message and executes the function corresponding to the command in coordination with the RD controller 32 based on the third message. Accordingly, the function included in the image forming apparatus 30 may be executed with the simplified message provided as a notification from the network-based service 21 to the image forming apparatus 30.

The DS job manager 27 may sequentially transmit a total of two second messages Msg2. The above exemplary embodiment is based on an assumption that the service 21 has ascertained an accumulated facsimile-received document. In order to satisfy this assumption, the service 21 may send another second message Msg2' (i.e., a command for sending a list of accumulated facsimile-received documents to the image forming apparatus 30) to the image forming apparatus 30 on a regular basis (e.g., once a day) or on an irregular basis prior to sending the second message Msg2 (i.e., a command for transferring a facsimile-received document) in step S26 described above.

For example, the description will proceed with reference to the following first message Msg1 as an example.

```
 {
 "orderID":92345678,
 "executeUserID":"reader234",
 "executeUserPW": "password4321Hoge",
 "getFaxDocList ":{
 {
  "boxID_range_start": 1001,
  "boxID_range_end": 1699,
  "ToURL": "https://hogehoge.cojp/salesheadquarters/yyy...
 }
```

The text string '"boxID_range_start": 1001"' indicates the start number of the confidential box serving as a target. The text string '"boxID_range_end": 1699"' indicates the end number of the confidential box serving as the target.

The first message Msg1 includes the text strings '"executeUserID":"reader234"' and '"executeUserPW'':''password4321Hoge"', each of which is confidential information indicating an account given document read access to the confidential box in the image forming apparatus 30.

The following second message Msg2' is created in correspondence with the first message Msg1 and is transmitted to the image forming apparatus 30.

```
 {
 "relatedOrderID":92345678,
 "orderFunction": "getFaxDocList",
 "orderMsgURL" : "https://fooService/zzz"
 }
```

The second message Msg2' does not include confidential information. The image forming apparatus 30 receiving the second message Msg2' sends the list of accumulated facsimile-received documents to the service 21.

If there are multiple image forming apparatuses 30, the second message Msg2' may be created and sent to each of the image forming apparatuses 30. Accordingly, the service 21 may ascertain accumulated facsimile-received documents with respect to each image forming apparatus 30.

Although the configuration of the service providing system 1 has been described with reference to the example where a function of the image forming apparatus 30 is executed, an apparatus that is to provide the function in accordance with the service providing system 1 is not limited to the image forming apparatus 30. For example, an apparatus, such as a monitoring camera, a household appliance, or a mobile unit including a vehicle, connectable to the Internet 2 and capable of changing the operational content in response to a user command may be applicable to the service providing system 1.

Although an example of the service providing system 1 has been described above with reference to the exemplary embodiment, the disclosed type of service providing system 1 is only an example, and the type of service providing system 1 is not limited to the scope of the exemplary embodiment. Various modifications and alterations may be added to the exemplary embodiment so long as they do not depart from the scope of the exemplary embodiment of the present disclosure, and exemplary embodiments to which such modifications and alterations are added are included in the disclosed technical scope. For example, the order of the steps in the service providing process shown in Fig. 5 may be changed.

The exemplary embodiment described above involves implementing the processes by using software as an example. Alternatively, a process equivalent to that in the flowchart shown in Fig. 5 may be implemented by using hardware. In this case, an increase in processing speed may be achieved, as compared with the case where the processes are implemented by using software.

In the exemplary embodiment, the processes are performed by any computer. The computer may perform the processes by using a processor serving as hardware, a program serving as software, or combination of these. In this case, the processor is configured to perform the processes in the exemplary embodiment in cooperation with the program and may function as a unit or a means in the exemplary embodiment. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiment, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. The program according to the present application may be provided as a program product.

Although the exemplary embodiment described above relates to an example where the programs are stored in the nonvolatile memory 44 and the nonvolatile memory 54, the locations where the programs are stored are not limited to the nonvolatile memory 44 and the nonvolatile memory 54. Each program according to the exemplary embodiment of the present disclosure may be provided in a state where it is stored in a storage medium readable by the computer 40 or 50. For example, the program may be provided in a state where it is stored in an optical disk, such as a compact disc read-only memory (CD-ROM) or a digital versatile disc read-only memory (DVD-ROM). The program may be provided in a state where it is stored in a portable semiconductor memory, such as a universal serial bus (USB) memory or a memory card. The program may be provided in a state where it is stored in the ROM 42 or 52. Each of the ROM 42, the ROM 52, the nonvolatile memory 44, the nonvolatile memory 54, the CD-ROM, the DVD-ROM, the USB memory, and the memory card is an example of a non-transitory storage medium.

Furthermore, each of the image forming apparatus 30 and the computer 40 may download the corresponding program from an external apparatus (not shown) via the Internet 2, and store the downloaded program into the storage device. In this case, the CPU 51 of the image forming apparatus 30 may read the image forming program downloaded from the external apparatus from the storage device and execute the processes, and the CPU 41 of the computer 40 may read the server program downloaded from the external apparatus from the storage device and execute the processes.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A service providing system comprising:
   a first apparatus including:
      at least one coordination unit that connects to a service on an Internet to provide a function included in the first apparatus, and
      a first executer that executes the function in coordination with the coordination unit; and
   a second apparatus existing on the Internet and connected to the first apparatus, the second apparatus including:
      a second executer that generates a third message based on a second message, the third message including identification information of a job for executing the function included in the first apparatus, the second message including information for extracting a first message that includes a command for executing the function from the service and that indicates content of the function to be executed,
   wherein the first executer acquires the third message from the second apparatus and executes the function based on the third message.
(((2))) The service providing system according to (((1))),
   wherein the coordination unit acquires the second message from the second apparatus based on the identification information of the job included in the third message from the first executer, acquires the first message from the service based on content of the second message, and executes the function corresponding to the command in coordination with the first executer.
(((3))) The service providing system according to (((1))) or (((2))),
   wherein the first message includes confidential information, and
   wherein the second message does not include the confidential information.
(((4))) The service providing system according to (((3))),
   wherein the confidential information is information for identifying an individual or is classified information.
(((5))) The service providing system according to any one of (((1))) to (((4))),
   wherein if the first message does not include confidential information and has a message size smaller than or equal to a predetermined threshold value, the first message and the second message are identical to each other.
(((6))) The service providing system according to (((2))),
   wherein if a size of the second message from the service is smaller than or equal to a predetermined threshold value, the second apparatus acquires the second message.
(((7))) The service providing system according to (((2))) or (((6))),
   wherein if a size of the second message from the service is larger than a predetermined threshold value, the second apparatus does not acquire the second message.
(((8))) The service providing system according to (((2))),
   wherein if the second message from the service does not include a predetermined text string, the second apparatus acquires the second message.
(((9))) The service providing system according to (((2))) or (((6))),
   wherein if the second message from the service includes a predetermined text string, the second apparatus does not acquire the second message.
(((10))) The service providing system according to (((2))),
   wherein the first executer further generates information for receiving authentication with respect to the second executer, and the coordination unit uses the information, from the first executer, for receiving the authentication to acquire the second message from the second apparatus.
(((11))) The service providing system according to (((10))),
   wherein the information for receiving the authentication has a set expiration time, and
   wherein if the expiration time has elapsed, the coordination unit makes a request to the first executer for the information for receiving the authentication.
(((12))) An information processing apparatus connected to a first service on an Internet, the information processing apparatus comprising:
   a processor configured to:
   acquire a third message including identification information of a job for executing a function included in the information processing apparatus, the third message being generated based on a second message including information for extracting a first message that includes a command for executing the function from a second service on the Internet and that indicates content of the function to be executed;
   acquire the second message from the first service based on the identification information of the job included in the third message acquired;
   acquire the first message from the second service based on content of the second message; and
   execute the function corresponding to the command.
(((13))) An information processing program causing a computer connected to a first service on an Internet to execute a process for processing information, the process comprising:
   acquiring a third message including identification information of a job for executing a function included in the computer, the third message being generated based on a second message including information for extracting a first message that includes a command for executing the function from a second service on the Internet and that indicates content of the function to be executed;
   acquiring the second message from the first service based on the identification information of the job included in the third message acquired;
   acquiring the first message from the second service based on content of the second message; and
   executing the function corresponding to the command.
(((1))) may be effective in that the function included in the apparatus may be executed with the simplified message provided as a notification from the network-based service to the apparatus.
(((2))) may be effective in that the message including the command for executing the function may be acquired from the simple message provided as a notification from the network-based service to the apparatus.
(((3))) may be effective in that the function included in the apparatus may be executed without having confidential information included in the message provided as a notification from the network-based service.
(((4))) may be effective in that the function included in the apparatus may be executed without having information for identifying an individual or classified information included in the message provided as a notification from the network-based service.
(((5))) may be effective in that the function included in the apparatus may be executed without having confidential information included in the message provided as a notification from the network-based service and with the message size being smaller than or equal to the threshold value.
(((6))) may be effective in being able to ensure that the size of the message provided as a notification from the network-based service is smaller than or equal to the threshold value.
(((7))) may be effective in being able to ensure that, of the message provided as a notification from the network-based service, a message whose size is larger than the threshold value is not to be acquired.
(((8))) may be effective in being able to ensure that the message provided as a notification from the network-based service does not include the predetermined text string.
(((9))) may be effective in being able to ensure that, of the message provided as a notification from the network-based service, a message including the predetermined text string is not to be acquired.
(((10))) may be effective in that only the first apparatus having the information for receiving the authentication may acquire the second message from the second apparatus.
(((11))) may be effective in that the second message may be acquired from the second apparatus even if the expiration time set for the information for receiving the authentication has elapsed.
(((12))) may be effective in that the function included in the apparatus may be executed with the simplified message provided as a notification from the network-based service to the apparatus.
(((13))) may be effective in that the function included in the apparatus may be executed with the simplified message provided as a notification from the network-based service to the apparatus.

## Claims

1. A service providing system comprising:
a first apparatus including:
at least one coordination unit that connects to a service on an Internet to provide a function included in the first apparatus, and
a first executer that executes the function in coordination with the coordination unit; and
a second apparatus existing on the Internet and connected to the first apparatus, the second apparatus including:
a second executer that generates a third message based on a second message, the third message including identification information of a job for executing the function included in the first apparatus, the second message including information for extracting a first message that includes a command for executing the function from the service and that indicates content of the function to be executed,
wherein the first executer acquires the third message from the second apparatus and executes the function based on the third message.

2. The service providing system according to claim 1,
wherein the coordination unit acquires the second message from the second apparatus based on the identification information of the job included in the third message from the first executer, acquires the first message from the service based on content of the second message, and executes the function corresponding to the command in coordination with the first executer.

3. The service providing system according to claim 1 or 2,
wherein the first message includes confidential information, and
wherein the second message does not include the confidential information.

4. The service providing system according to claim 3,
wherein the confidential information is information for identifying an individual or is classified information.

5. The service providing system according to any one of claims 1 to 4,
wherein if the first message does not include confidential information and has a message size smaller than or equal to a predetermined threshold value, the first message and the second message are identical to each other.

6. The service providing system according to claim 2,
wherein if a size of the second message from the service is smaller than or equal to a predetermined threshold value, the second apparatus acquires the second message.

7. The service providing system according to claim 2 or 6,
wherein if a size of the second message from the service is larger than a predetermined threshold value, the second apparatus does not acquire the second message.

8. The service providing system according to claim 2,
wherein if the second message from the service does not include a predetermined text string, the second apparatus acquires the second message.

9. The service providing system according to claim 2 or 6,
wherein if the second message from the service includes a predetermined text string, the second apparatus does not acquire the second message.

10. The service providing system according to claim 2,
wherein the first executer further generates information for receiving authentication with respect to the second executer, and the coordination unit uses the information, from the first executer, for receiving the authentication to acquire the second message from the second apparatus.

11. The service providing system according to claim 10,
wherein the information for receiving the authentication has a set expiration time, and wherein if the expiration time has elapsed, the coordination unit makes a request to the first executer for the information for receiving the authentication.

12. An information processing apparatus connected to a first service on an Internet, the information processing apparatus comprising:
a processor configured to:
acquire a third message including identification information of a job for executing a function included in the information processing apparatus, the third message being generated based on a second message including information for extracting a first message that includes a command for executing the function from a second service on the Internet and that indicates content of the function to be executed;
acquire the second message from the first service based on the identification information of the job included in the third message acquired;
acquire the first message from the second service based on content of the second message; and
execute the function corresponding to the command.

13. An information processing program causing a computer connected to a first service on an Internet to execute a process for processing information, the process comprising:
acquiring a third message including identification information of a job for executing a function included in the computer, the third message being generated based on a second message including information for extracting a first message that includes a command for executing the function from a second service on the Internet and that indicates content of the function to be executed;
acquiring the second message from the first service based on the identification information of the job included in the third message acquired;
acquiring the first message from the second service based on content of the second message; and
executing the function corresponding to the command.

14. An information processing method executed by an apparatus connected to a first service on an Internet, the information processing method comprising:
acquiring a third message including identification information of a job for executing a function included in the apparatus, the third message being generated based on a second message including information for extracting a first message that includes a command for executing the function from a second service on the Internet and that indicates content of the function to be executed;
acquiring the second message from the first service based on the identification information of the job included in the third message acquired;
acquiring the first message from the second service based on content of the second message; and
executing the function corresponding to the command.
